(19) Europäisches Patentamt
European Patent Office
Office européen des brevets

(11) **EP 2 244 976 B1**

(12) **FASCICULE DE BREVET EUROPEEN**

(45) Date de publication et mention de la délivrance du brevet:
**22.02.2017 Bulletin 2017/08**

(51) Int Cl.:
***C01B 39/22*** *(2006.01)* ***B01J 20/18*** *(2006.01)*
***B01J 19/20*** *(2006.01)*

(21) Numéro de dépôt: **08865114.6**

(22) Date de dépôt: **16.12.2008**

(86) Numéro de dépôt international:
**PCT/FR2008/052315**

(87) Numéro de publication internationale:
**WO 2009/081022 (02.07.2009 Gazette 2009/27)**

(54) **ZEOLITE DE TYPE LSX A GRANULOMETRIE CONTROLEE**

LSX-ZEOLITH MIT KONTROLLIERTER TEILCHENGRÖSSE

LSX ZEOLITE OF CONTROLLED PARTICLE SIZE

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **20.12.2007 FR 0760080**

(43) Date de publication de la demande:
**03.11.2010 Bulletin 2010/44**

(73) Titulaire: **CECA S.A.**
**92250 La Garenne Colombes (FR)**

(72) Inventeurs:
• **BOUVIER, Ludivine**
**F-64140 Billere (FR)**
• **NICOLAS, Serge**
**F-64140 Lons (FR)**
• **DURAND, Guy-Henri**
**F-14600 Gonneville Sur Honfleur (FR)**

(74) Mandataire: **Lhoste, Catherine**
**ARKEMA France**
**DRD-DPI**
**420 Rue d'Estienne d'Orves**
**92705 Colombes Cedex (FR)**

(56) Documents cités:
**EP-A- 0 818 418    EP-A- 0 960 854**
**FR-A- 2 766 475**

• **GÜNTHER H. KÜHL: "CRYSTALLIZATION OF
LOW-SILICA FAUJASITE (SIO2/AL2O3 ~2.0)"
ZEOLITES, ELSEVIER SCIENCE PUBLISHING,
US, vol. 7, 1 septembre 1987 (1987-09-01), pages
451-457, XP000562955 ISSN: 0144-2449 cité dans
la demande**
• **ROMERO M D ET AL: "Synthesis of LSX zeolite
by microwave heating" MATERIALS RESEARCH
BULLETIN, ELSEVIER, KIDLINGTON, GB, vol. 39,
no. 3, 1 mars 2004 (2004-03-01), pages 389-400,
XP004488719 ISSN: 0025-5408**

**Description**

La présente invention concerne une zéolite de type faujasite X à basse teneur en silice, plus précisément une zéolite LSX (acronyme anglais de « Low Silica X ») de rapport atomique Si/Al inférieur ou égal à 1,15, présentant un taux de cristallinité élevée et dont les cristaux présentent une distribution granulométrique monomodale étroite. La présente invention a également trait au procédé de préparation, et notamment de fabrication industrielle de ladite zéolite LSX.

Les faujasites constituent un groupe d'espèces minérales caractérisées par leur structure topographique cristallographique, qui sont notamment décrites dans l'ouvrage de Donald W. Breck "Zeolite Molecular Sieves", éditions John Wiley and Sons, 1974 - p. 92 et suivantes. La règle dite de Lowenstein leur impose un Si/Al supérieur ou tout au moins égal à 1. On a coutume de distinguer :

- les faujasites X avec Si/Al < 1,5, et
- les faujasites Y avec Si/Al > 1,5.

Les faujasites X classiques sont de rapport Si/Al ≥ 1,2. Les faujasites LSX (acronyme anglais de Low Silica X) ou faujasites à faible teneur en silice sont des espèces zéolitiques de type X de rapport atomique Si/Al inférieur ou égal à 1,15, de préférence égal à 1 ± 0,05 (les valeurs inférieures à l'unité traduisent les incertitudes analytiques sur la mesure de ce rapport et les valeurs supérieures, soit la même incertitude analytique, soit un écart tolérable de pureté du produit). Cette définition est retenue dans le cadre de la présente invention.

Les caractéristiques physiques des faujasites (capacité d'échange, adsorption d'azote, etc...) évoluent en fonction du rapport Si/Al. Les faujasites de type LSX présentent un intérêt tout particulier en raisons du fait que, parmi toutes les faujasites envisageables, ce sont celles qui possèdent le maximum possible d'ions aluminium tétraédriques par maille cristalline et par conséquent disposent potentiellement du plus grand nombre de sites d'adsorption pour des molécules très variées comme $CO_2$, $N_2$, etc.

D'une façon très générale, on prépare aujourd'hui les zéolites, notamment les zéolites de type X et de type LSX par :

- mélange d'une solution d'aluminate(s) alcalin(s) et d'une solution de silicate(s) à une température comprise entre l'ambiante et une température inférieure à leur température d'ébullition ;
- gélification du mélange résultant ;
- puis mûrissement du gel au cours duquel apparaissent des germes précurseurs,
- suivi de la cristallisation qui est une phase de croissance de cristaux à partir de ces germes.

La composition du gel obtenu à partir du mélange aluminate(s)/silicate(s) est un paramètre important dans la synthèse de zéolite. Ainsi, l'art antérieur est riche en exemples montrant que de faibles variations de la composition du gel de synthèse ou des conditions de cristallisation peuvent conduire à des zéolites de natures très différentes et/ou même des composés amorphes.

Un autre facteur influençant la croissance des cristaux est l'agitation (ou la non agitation) du milieu de synthèse indépendamment de la composition de la solution ou du gel de cristallisation.

Par ailleurs, dans la plupart des procédés de préparation décrits pour l'obtention d'un grand nombre de zéolites, l'homme du métier déconseille vivement l'emploi d'agitateurs au cours de l'étape de mûrissement (nucléation des cristaux) aussi bien qu'au cours de l'étape de cristallisation de la zéolite.

On est donc partagé entre deux impératifs *a priori* contradictoires : l'un est d'agiter pour favoriser les échanges de matière et de chaleur et éviter la synérèse des cristaux en formation ; l'autre est au contraire de ne pas agiter (synthèse statique), pour éviter la déstabilisation du système et l'apparition de phases non souhaitées.

Par exemple D.E.W. Vaughan (*Chem. Engin. Progress, 84*(2), (1988), 25-31), montre que selon la composition de la solution ou du gel de cristallisation, on peut voir apparaître, soit un mélange de faujasite et de gmélinite en milieu statique, soit de la zéolite P en milieu agité au moyen d'un agitateur à ancre. Dans ce cas, le fort taux de cisaillement généré par l'agitateur à ancre, localisé dans seulement une partie du milieu de synthèse, modifie considérablement le processus de germination et de croissance des cristaux de zéolites et leur nature même si la composition initiale du gel est la même que lors de cette même synthèse réalisée sans agitation (en statique).

R.M. Barrer (Hydrothermal Chemistry of Zeolites, in Academic Press, (1982), Chapitre 4, point 5.6, pp. 170-171), observe, pour des zéolites se préparant usuellement en milieu agité, telles que les faujasites, une baisse de la cristallinité lorsqu'on augmente la vitesse de l'agitateur et donc le cisaillement local.

Pour les raisons mentionnées ci-dessus, de nombreuses synthèses de zéolites sont réalisées en statique, c'est-à-dire sans agitation, ou à faible vitesse d'agitation dans le but de favoriser la croissance lente des cristaux, ainsi que l'apparition et la stabilisation de phases zéolitiques, peu stables, du point de vue thermodynamique.

De plus, il est bien connu des fabricants de zéolites que la transposition de certaines synthèses de l'échelle laboratoire à l'échelle industrielle est difficile voire impossible d'un point de vue économique car elle conduit souvent à des rendements en zéolites faibles et des taux de cristallinité beaucoup plus faibles que ceux généralement obtenus au niveau du laboratoire (D. W. Breck, Zeolites Molecular Sieves, John Wiley and Sons, (1974), 727-731). L'industrialisation de ces synthèses exige donc une modification importante des conditions opératoires avant de pouvoir obtenir des zéolites de bonne cristallinité et dans des conditions économiques satisfaisantes.

Il est d'autre part connu (G.H. Kühl, Zeolites, 7, (1987), 451-457) que les difficultés de synthèse des faujasites augmentent quand leur rapport atomique Si/Al diminue, et que les méthodes traditionnelles échouent pour la préparation à grande échelle des faujasites de type LSX. En particulier, à partir d'un milieu purement sodique, on obtient un mélange de zéolite NaA (généralement majoritaire) et de la zéolite NaX, et il est donc nécessaire d'introduire une certaine quantité d'ions potassium pour synthétiser la structure faujasite LSX ; dans ce cas, celle-ci est obtenue pour des rapports Na/Na+K dans le gel de synthèse compris généralement entre 0,7 et 0,8.

La synthèse de faujasites LSX a été décrite par exemple dans FR 2 357 482, GB 1 580 928 ou par G. H. Kühl (Zeolites, 7, (1987), 451-457) : un mélange contenant de l'hydroxyde de sodium, de l'hydroxyde de potassium, de l'aluminate et du silicate de sodium est cristallisé sans agitation à une température inférieure à 50°C, ou mûri sans agitation à une température inférieure à 50°C puis cristallisé également sans agitation à une température de 60°C à 100°C. Pour obtenir des zéolites LSX de bonne cristallinité (typiquement supérieure ou égale à 90%), la durée globale de la synthèse est de l'ordre 50 heures pour une synthèse de type industrielle pratiquée dans un réacteur de 3 m$^3$, ce qui n'est pas satisfaisant sur le plan de la rentabilité industrielle.

Le brevet US 4 859 217 décrit une méthode dans laquelle un mélange contenant de l'hydroxyde de sodium, de l'hydroxyde de potassium et de l'alumine est mélangé à une seconde solution contenant du silicate de sodium. Ce mélange est laissé gélifier à basse température (4-12°C), puis mûri à 36°C et ensuite cristallisé par élévation de température à 70°C. Dans ce brevet, l'étape de mûrissement dure de 2 à 3 jours et l'étape de cristallisation 16 heures, ce qui, là encore, n'est pas transposable industriellement.

EP-A-0 818 418 décrit un procédé de fabrication de faujasites LSX où les étapes de mûrissement et de cristallisation ont lieu sous agitation en utilisant comme moyen d'agitation une vis d'Archimède, dispositif bien connu de l'homme du métier, décrit par exemple dans l'ouvrage « Ullmann's Encyclopedia of Industrial Chemistry », VCH, (1988), volume B2, p.25-5 sqq. Dans l'exemple 2, les zéolites LSX obtenues à l'échelle industrielle sous agitation (taux de cisaillement : 25 s$^{-1}$), avec une étape de mûrissement à 50°C pendant 20 heures, et une étape de cristallisation à 90°C pendant 4 heures. Les zéolites obtenues présentent une excellente cristallinité (égale voire supérieure à 97 %) et la taille des cristaux (diamètre moyen mesuré par MEB) est de 6 $\mu$m.

EP-B1-0 922 673 décrit un procédé de synthèse de zéolites LSX où l'étape de mûrissement à une température allant de 0°C à 60°C a lieu sous agitation avec ajout d'une zéolite, de préférence de type A ou de type faujasite, pendant l'étape de mûrissement. Les faujasites LSX obtenues présentent une répartition granulométrique bimodale avec une première population de particules ayant une granulométrie allant de 1 $\mu$m à 8 $\mu$m, et une autre population de particules ayant une granulométrie allant de 5 $\mu$m à 15 $\mu$m.

EP-B1-0 960 854 décrit un procédé de synthèse de zéolites LSX où l'étape de mûrissement à une température allant de 0°C à 60°C a lieu sous agitation avec ajout, après la gélification et/ou pendant l'étape de mûrissement, de 0,3% jusqu'à 10% d'une solution de composition 10-20 Na$_2$O ; Al$_2$O$_3$; 5-20 SiO$_2$ ; 100-250 H$_2$O, préalablement mûrie, à une température allant de 10°C à 60°C, pendant une durée variant de 10 minutes à 3 heures. Il est décrit que les faujasites LSX sont obtenues avec une granulométrie principale, ce qui laisse entendre la présence d'autre(s) population(s) présentant des granulométries différentes.

Les présents inventeurs ont maintenant recherché à obtenir des zéolites LSX présentant des propriétés de cristallinité et de granulométrie contrôlées, ainsi que le procédé de préparation, notamment adapté à une production industrielle, permettant d'accéder à ces zéolites. Ainsi, la présente invention a pour objectif des zéolites présentant des propriétés de cristallinité et de granulométrie contrôlées, ainsi qu'un procédé de synthèse de zéolites LSX permettant d'améliorer le mode de formation et la qualité des cristaux desdites zéolites.

Ainsi, selon un premier aspect, l'invention propose une zéolite LSX de rapport atomique Si/Al inférieur ou égal à 1,15, de préférence égal à 1 $\pm$ 0,05, sous forme de cristaux individualisés dont :

- la distribution granulométrique déterminée par comptage MEB est monomodale, de largeur de pic (2$\sigma$) inférieure à 8, de préférence inférieure à 6, de préférence encore inférieure à 4, de manière tout à fait préférée inférieure à 2 ; et
- le diamètre moyen en nombre (d$_{50}$) mesuré par microscopie électronique à balayage est supérieur à 0,1 $\mu$m et inférieur à 10 $\mu$m, de préférence inférieur à 4 $\mu$m, de préférence encore inférieur à 3 $\mu$m.

Par distribution « monomodale », on entend une distribution qui ne soit pas significativement différente de la loi log-normale au risque de 1%, loi log-normale appliquée sur les résultats statistiques issus du test du $\chi^2$ (Chi$^2$) (logiciel utilisé « Statistica » de la société StatSoft France). Plus spécifiquement, par distribution non significativement différente de la loi log-normale au risque de 1%, on entend que le risque « p » du test du Chi$^2$ est supérieur ou égal à 1%, de préférence supérieur ou égal à 5%, de préférence encore supérieur ou égal à 8%.

Les zéolites de l'invention présentent une granulométrie monomodale étroite, ce qui assure une homogénéité de taille de cristaux, et par conséquent des caractéristiques optimales, car contrôlées.

La zéolite de la présente invention présente en outre un taux de cristallinité supérieur à 88%, avantageusement supérieur à 90%, de préférence supérieur à 93% et de manière encore préférée supérieur à 95%.

Dans les présentes description et revendications, la distribution granulométrique est déterminée par analyse de clichés MEB (microscopie électronique à balayage). Le processus d'analyse d'images qui permet de déterminer la distribution de la taille des cristaux consiste en un comptage visuel de l'ensemble des cristaux apparaissant sur un cliché MEB contenant au moins 100 cristaux. La taille retenue pour chaque cristal est celle de la plus grande section dudit cristal considéré.

L'opération de comptage est effectuée sur au moins 2 clichés, la distribution granulométrique résultante étant la moyenne des distributions granulométriques observées sur chacun des clichés. La largeur du pic et le diamètre moyen en nombre sont calculés selon les méthodes classiques connues de l'homme du métier, en appliquant les règles statistiques de distribution gaussienne.

Le taux de cristallinité est quant à lui déterminé par mesure du volume de Dubinin, qui est une estimation du volume microporeux mesuré par adsorption d'azote à 77 K, rapporté à une faujasite de volume de Dubinin égal à 0,325 cm$^3$/g, prise pour référence à 100% de cristallinité.

Le volume de Dubinin décrit ci-dessus est calculé selon la relation de Dubinin-Radushkevich, telle que décrite par Lowell et coll. (Characterization of Porous Solids and Powders : Surface Area, Pore Size and Density, chapitre 9, « Micropore Analysis », pages 143-145), et reproduite ci-dessous :

$$\log V = \log V_0 - D(\log \frac{P}{P_0})^2$$

qui relie le volume V d'azote adsorbé dans le matériau adsorbant à la pression relative $P/P_0$. Le volume de Dubinin est le volume $V_0$, volume maximal de vapeur d'azote que l'on peut condenser dans les micropores du matériau adsorbant. Il s'exprime en cm$^3$ de vapeur (azote) (ramenée aux conditions normales) par gramme d'adsorbant.

Préalablement à la mesure, l'échantillon est prétraité à 500°C pendant 12 heures sous vide (P < 5.10$^{-6}$ Torr (soit 6,7.10$^{-4}$ Pa). La mesure est ensuite effectuée sur un appareil de type ASAP 2010 M de Micromeritics. Le gaz adsorbat utilisé est l'azote. Le tracé de l'isotherme est réalisé à l'aide d'une table de pression d'au moins 35 points entre 0,01 et 1 $P/P_0$. On porte sur un diagramme la valeur de log V en fonction de $(\log(P/P_0))^2$. Le volume de Dubinin est obtenu à partir de l'ordonnée à l'origine de la droite de régression linéaire des points dont $(\log(P/P_0))^2$ est compris entre 1 et 2 (soit 0,039 < $P/P_0$ < 0,1). L'incertitude de mesure est de ± 0,003.

Selon un autre aspect, la présente invention vise un procédé de préparation de zéolite LSX, ledit procédé permettant de stabiliser plus facilement certaines phases zéolitiques très instables, y compris lorsque la réaction est conduite en statique (c'est-à-dire en milieu non agité), d'améliorer les rendements quantitatifs de synthèse, et de garantir un taux de cristallinité élevé des zéolites. De plus, le procédé de l'invention permet de contrôler efficacement la distribution granulométrique des cristaux de LSX. En outre, le procédé visé est facilement transposable à l'échelle industrielle.

Ainsi, la présente invention a pour objet un procédé de préparation d'une zéolite LSX, de rapport atomique Si/Al inférieur ou égal à 1,15, de préférence égal à 1 ± 0,05, et dont la distribution granulométrique est monomodale et comprise entre 0,1 μm et 10 μm, de préférence entre 0,1 μm et 4 μm, de préférence encore entre 0,1 μm et 3 μm, par mûrissement sous agitation, et cristallisation, éventuellement sous agitation, d'un gel dont la composition molaire répond aux conditions suivantes :

- rapport $Na_2O/(Na_2O + K_2O)$ de 0,75 à 1, de préférence de 0,75 à 0,8 ;
- rapport $H_2O/Al_2O_3$ de 60 à 85, de préférence de 65 à 80, et de préférence encore de 70 à 80 ;
- rapport $SiO_2/Al_2O_3$ de 1,8 à 2,2 ;
- rapport $(Na_2O + K_2O)/Al_2O_3$ de 4,8 à 6, et de préférence de 5 à 5,5.

Le procédé selon l'invention permet d'obtenir des cristaux de zéolite de type faujasite LSX de forme homogène bien définie, c'est-à-dire substantiellement exempts d'agglomérat de forme non définie et dont la distribution granulométrique est monomodale de largeur de pic (2σ) inférieure à 8, de préférence inférieure à 6, de préférence encore inférieure à 4, de manière tout à fait préférée inférieure à 2.

Selon un mode de réalisation tout à fait préféré, 80% des cristaux de cette distribution granulométrique monomodale sont compris entre 1 μm et 4 μm, de préférence entre 1 μm et 3 μm. La distribution granulométrique est déterminée par comptage MEB, comme indiqué précédemment.

En outre, le procédé de l'invention permet d'obtenir des rendements de cristallisation quantitatifs, ou tout au moins quasi quantitatifs, en comparaison avec les rendements obtenus avec les procédés de synthèse connus de l'homme du métier, qu'ils soient réalisés en milieu statique ou agité. Le procédé selon l'invention est par ailleurs facilement transposable à l'échelon industriel, comme indiqué plus haut, et notamment en raison des caractéristiques décrites ci-dessous.

Ainsi, le procédé de la présente invention met tout d'abord en oeuvre un mélange d'une solution aqueuse d'aluminate(s) alcalin(s), avec une source de silice, de préférence une silice colloïdale ou une solution de silicate(s) alcalin(s), et de l'hydroxyde de sodium et de l'hydroxyde potassium, jusqu'à gélification du mélange résultant.

Ce mélange initial est réalisé selon les techniques classiques connues de l'homme du métier, avec les solutions de matières premières appropriées connues dans le domaine, pour autant que soient respectés les rapports molaires indiqués plus haut et rappelés ci-dessous :

- rapport $Na_2O/(Na_2O + K_2O)$ de 0,75 à 1, de préférence de 0,75 à 0,8 ;
- rapport $H_2O/Al_2O_3$ de 60 à 85, de préférence de 65 à 80, et de préférence encore de 70 à 80 ;
- rapport $SiO_2/Al_2O_3$ de 1,8 à 2,2 ;
- rapport $(Na_2O + K_2O)/Al_2O_3$ de 4,8 à 6, et de préférence de 5 à 5,5.

L'ordre d'introduction des différentes matières premières importe peu ; on peut introduire dans le réacteur de synthèse la solution d'aluminate(s) alcalin(s), puis la source de silice. Selon une variante la source de silice est introduite dans le réacteur, puis est ajoutée la solution d'aluminate(s) alcalin(s). Selon encore une autre variante, la source de silice et la solution d'aluminate(s) alcalin(s) sont introduites simultanément dans le réacteur.

La solution d'hydroxyde de potassium peut être introduite indifféremment dans la source de silice ou dans la solution d'aluminate(s) alcalin(s), ou bien à la fois dans la source de silice et dans la solution d'aluminate(s) alcalin(s).

Dans un mode particulier de réalisation, il est possible d'introduire également dans le mélange initial, une semence. Lorsqu'elle est présente, celle-ci est de préférence préalablement mélangée avec la solution d'aluminate(s) alcalin(s) et/ou la source de silice, avant introduction dans le milieu réactionnel. En variante, la semence peut être introduite, dans le milieu réactionnel au cours de la gélification et/ou au début de l'étape de mûrissement du gel.

La semence est avantageusement choisie parmi les semences habituellement utilisées dans le domaine, et par exemple parmi les zéolites, les argiles et les solutions nucléantes à base de silice et d'alumine, qu'elles soient ou non sous forme de gel.

La semence est généralement ajoutée en quantité comprise entre 0,01% et 1,5% en poids, de préférence entre 0,01% et 1% en poids par rapport au poids du mélange initial.

Le mélange des différentes matières premières indiquées *supra* doit permettre un mélange aussi homogène que possible, et à cet effet, il est avantageux d'utiliser des mélangeurs adaptés et connus dans le domaine, tels que par exemple turbine défloculeuse ou vis d'Archimède. Tout autre type de mélangeur/agitateur peut être utilisé afin d'obtenir un gel homogène.

Après mélange des différentes matières premières, éventuellement en présence d'une ou plusieurs semences, un gel se forme (gélification), lequel gel est alors engagé dans une étape de mûrissement.

Selon le procédé de l'invention, le mûrissement est conduit sous agitation, généralement sous forte agitation, avec un taux de cisaillement supérieur à 25 $s^{-1}$, de préférence supérieur à 50 $s^{-1}$, de préférence encore supérieur à 100 $s^{-1}$, et de manière tout à fait préférée supérieur à 125 $s^{-1}$.

Cette agitation peut être assurée par tout moyen connu en soi, étant entendu que le taux de cisaillement indiqué ci-dessus soit respecté. Selon un mode de réalisation avantageux, l'agitation est assurée au moyen d'un agitateur axial et/ou radial, de préférence choisi parmi agitateur hélice, agitateur à pales, par exemple de type « impeller » ou agitateur à pales courbes, et vis d'Archimède. De préférence, l'agitation est assurée par une vis d'Archimède, comme décrit par exemple dans la demande de brevet EP-A-0 818 048.

Il a été observé qu'une agitation avec un taux de cisaillement supérieur à 25 $s^{-1}$, de préférence supérieur à 50 $s^{-1}$, de préférence encore supérieur à 100 $s^{-1}$, et de manière tout à fait préférée supérieur à 125 $s^{-1}$, permet un mûrissement optimal du gel, et l'obtention de zéolite avec les caractéristiques souhaitées. Il n'y a pas de limite supérieure au taux de cisaillement préconisé, si ce n'est celui imposé par les caractéristiques mécaniques de l'agitateur utilisé.

L'agitation pendant le mûrissement permet notamment de pallier les inconvénients habituellement rencontrés lors des préparations classiques de zéolites, notamment faujasites X à basse teneur en silice, en particulier lorsque l'étape de mûrissement est effectuée en statique.

En effet, au cours des synthèses en milieu statique de zéolites, les germes apparaissent de façon aléatoire dans le milieu de synthèse c'est-à-dire à des endroits imprévisibles et à des moments différents ce qui conduit à des distributions granulométriques de cristaux larges et peu reproductibles et à la présence de plusieurs phases cristallines ou amorphes intermédiaires.

Le mûrissement du gel défini précédemment est généralement conduit à une température comprise entre 0°C et 80°C, de préférence entre 30°C et 70°C. Une température inférieure à 0°C peut ralentir de manière non souhaitée l'étape de mûrissement, ce qui pourrait impacter négativement la rentabilité. Une température supérieure à 80°C peut être envisagée, mais conduirait à des coûts de fabrication prohibitifs.

Le mûrissement du gel est ainsi avantageusement conduit à une température préférentielle comprise entre 30°C et 70°C, pendant une durée comprise entre 0,5 heures et 40 heures, de préférence entre 5 heures et 30 heures, et de manière plus préférée entre 10 heures et 24 heures.

Après cette étape de mûrissement, le milieu réactionnel est engagé dans une étape de cristallisation. Celle-ci est avantageusement conduite à une température comprise entre 50°C et 100°C, pendant une durée comprise entre 0,5 heure et 10 heures, de préférence entre 1 heure et 5 heures.

La cristallisation peut être effectuée en statique ou sous agitation. Lorsque la cristallisation est conduite sous agitation, celle-ci peut être de tout type, et de préférence avec un taux de cisaillement supérieur à 25 s$^{-1}$, de préférence supérieur à 50 s$^{-1}$, de préférence encore supérieur à 100 s$^{-1}$, et de manière tout à fait préférée supérieur à 125 s$^{-1}$. Par exemple, l'agitation du milieu de cristallisation est conduite dans les mêmes conditions d'agitation (agitateur, taux de cisaillement) que celles utilisées dans l'étape de mûrissement.

Le procédé selon la présente invention présente l'avantage de diminuer considérablement la durée globale du procédé de fabrication industrielle, avec des mûrissements entre 0°C et 80°C, de préférence entre 30°C et 70°C environ, se déroulant sur des durées de 0,5 à 40 heures, et des cristallisations à 50-100°C durant 0,5 à 10 heures. Différentes combinaisons des variantes des étapes de mûrissement et de cristallisation définies ci-dessus sont possibles, et toutes ces variantes appartiennent à la présente invention.

À l'issue de la cristallisation, la zéolite obtenue est récupérée selon les techniques classiques connues de l'homme du métier, telles que filtration, lavage, séchage, et autres...

Contrairement aux divers procédés connus de l'art antérieur, l'ensemble du procédé selon la présente invention présente comme autre avantage de pouvoir être mis en oeuvre à pression atmosphérique et avec des durées, notamment de cristallisation, plus faibles, permettant ainsi la synthèse de zéolites LSX de cristallinité et granulométrie contrôlées.

La présente invention est maintenant décrite à l'aide des exemples qui suivent, qui ont pour but d'illustrer certains modes de réalisation de l'invention, sans toutefois limiter la portée de ladite invention, telle que revendiquée dans les revendications annexées.

**Exemple 1: Synthèse de zéolite LSX à l'échelle du laboratoire.**

*Étape a) : Préparation du gel*

1) Solution 1 d'aluminate de sodium et de potassium :

- Eau déminéralisée : 800 g
- Hydroxyde de sodium (pureté 99%) : 420 g
- Hydroxyde de potassium (pureté en $K_2O$ :85%) : 255 g

Cette solution est portée à 115°C puis 240 g d'hydroxyde d'aluminium sont ajoutés.

2) Solution 2 de silicate de sodium :

- Eau déminéralisée : 620 g
- Silicate de sodium : 710 g

Dans un réacteur de 3 L, les solutions 1 et 2 sont mélangées au moyen d'une turbine défloculeuse à 2000 tours/minute pendant 5 minutes pour obtenir un gel homogène. Cette composition correspond à la stoechiométrie suivante :

$$3,95\ Na_2O : 1,26\ K_2O : 2\ SiO_2 : 1\ Al_2O_3 : 77,4\ H_2O$$

Après mélange des réactifs et gélification, le gel est ensuite mûrit 18 heures à 50°C, puis on effectue la cristallisation pendant 4 heures à 95°C, le mûrissement et la cristallisation étant effectués dans les mêmes conditions d'agitation, conditions que l'on a fait varier, comme relaté dans le tableau ci-après. En variante, la cristallisation est effectuée dans des conditions d'agitation différentes (plus fort ou plus faible taux de cisaillement), voire en statique (sans agitation, taux de cisaillement nul).

Les cristaux obtenus après filtration, lavage et séchage sont identifiés par diffraction des rayons X comme étant de la zéolite de type faujasite. L'analyse chimique du solide donne un rapport Si/Al = 1,01.

Les résultats obtenus (cf. Tableau 1) sont exprimés en valeurs de cristallinité mesurées par leur volume de Dubinin qui est une estimation du volume microporeux, mesuré par adsorption d'azote à 77°K, rapporté à celui d'une LSX prise pour référence à 100% de cristallinité, égal à 0,325 cm$^3$/g (calcul théorique).

-- Tableau 1 --

| Mode d'agitation | Vitesse d'agitation tr/min | Taux de cisaillement s$^{-1}$ | Volume de Dubinin cm$^3$/g | Cristallinité |
|---|---|---|---|---|
| Statique | 0 | 0 | 0,310 | 95% |
| Impeller | 50 | 27 | 0,301 | 93% |
| | 250 | 135 | 0,300 | 92% |
| Vis d'Archimède | 50 | 26 | 0,304 | 93,5% |
| | 200 | 100 | 0,308 | 94,8% |
| | 250 | 130 | 0,311 | 96% |
| | 250* | 130* | 0,312 | 96,5% |
| * :vitesse et taux de cisaillement pour l'étape de mûrissement, l'étape de cristalllisation étant réalisée en statique (sans agitation, taux de cisaillement nul). | | | | |

On constate qu'à conditions identiques de mûrissement et cristallisation, le passage de la synthèse du milieu statique à un milieu agité au moyen d'un agitateur type « impeller » ou vis d'Archimède, ne provoque pas de perte réelle de cristallinité.

L'utilisation de la vis d'Archimède comme outil de mélange permet d'obtenir une poudre de très bonne cristallinité (supérieure à 95%) même à fort taux de cisaillement.

L'analyse du produit obtenu par microscopie électronique à balayage (MEB) permet de déterminer la distribution granulométrique des cristaux et de mesurer un diamètre moyen en nombre. Les résultats sont rassemblés dans le tableau 2 ci-après :

-- Tableau 2 --

| Mode d'agitation | Vitesse d'agitation tr/min | Taux de cisaillement s$^{-1}$ | Distribution granulométrique | p (%) | D$_{50}$ | 2$\sigma$ |
|---|---|---|---|---|---|---|
| Statique | 0 | 0 | Pseudo-gaussien 0,1 $\mu$m et 11 $\mu$m | 0 | 5,6 | 11,6 |
| Impeller | 50 | 27 | mono-modale | 4 | 2,3 | 2,8 |
| | 250 | 135 | mono-modale | 15 | 1,3 | 1,2 |
| Vis d'Archimède | 50 | 26 | mono-modale | 8 | 3,9 | 5,1 |
| | 200 | 100 | mono-modale | 45 | 2,6 | 2,8 |
| | 250 | 130 | mono-modale | 51 | 2,2 | 2,6 |
| | 250* | 130* | mono-modale | 42 | 2,4 | 2,8 |
| * :vitesse et taux de cisaillement pour l'étape de mûrissement, l'étape de cristalllisation étant réalisée en statique (sans agitation, taux de cisaillement nul). | | | | | | |

On constate que le passage d'un milieu statique pendant le mûrissement et la cristallisation à un milieu agité pendant les mêmes étapes permet d'obtenir des cristaux de zéolithe de distribution granulométrique gaussienne mono-monomodale, plus étroite et de diamètre moyen en nombre inférieur à 4 $\mu$m, avec des taux de cisaillements supérieurs à 25 s$^{-1}$.

EP 2 244 976 B1

**Exemple 2 : Synthèse au moyen d'une semence type LSX**

On reproduit les conditions de l'exemple 1 précédent, à la différence près que juste avant l'opération de mélange dans le réacteur de 3 L, on ajoute à la solution 1 d'aluminate un pourcentage de poudre de LSX (pourcentage en poids de produit anhydre par rapport à la masse totale du gel de départ). L'ajout est réalisé sous agitation avec différents taux de cisaillement comme indiqué dans le Tableau ci-après.

On constate que l'ajout d'une poudre de zéolite LSX comme semence en quantité en poids inférieur à 1% permet d'obtenir une zéolite LSX de très haute pureté, pour des taux de cisaillement supérieurs à 25 s$^{-1}$.

Les résultats de cristallinité et de distribution granulométrique sont présentés dans les Tableaux 3 et 4 suivants :

-- Tableau 3 --

| Mode d'agitation | Taux de cisaillement s$^{-1}$ | % de semence | Volume de Dubinin cm$^3$/g | Cristallinité |
|---|---|---|---|---|
| Vis d'Archimède | 26 | 0,25 | 0,312 | 96% |
| | 130 | 0,25 | 0,311 | 96% |
| | 130 | 1 | 0,295 | 90% |

-- Tableau 4 --

| Mode d'agitation | Taux de cisaillement s$^{-1}$ | % de semence | Distribution granulométrique | p (%) | D$_{50}$ | 2$\sigma$ |
|---|---|---|---|---|---|---|
| Vis d'Archimède | 26 | 0,25 | mono-modale | 31 | 3,0 | 5 |
| | 130 | 0,25 | mono-modale | 64 | 2,8 | 4 |
| | 130 | 1 | mono-modale | 66 | 1,5 | 1,4 |

**Exemple 3 : Synthèse de zéolite LSX à l'échelle industrielle**

Les réactifs sont préparés comme dans l'exemple 1, les chiffres précédemment exprimés en grammes étant exprimés en kilogrammes. On utilise un réacteur de 3 m$^3$, muni d'une vis d'Archimède.

Le procédé de synthèse est alors conduit dans les mêmes conditions (taux de cisaillement, température, durée) que celles exposées dans l'exemple 1.

La zéolite obtenue présente des caractéristiques tout à fait semblables à celles obtenues dans l'exemple 1.

**Revendications**

1. Zéolite de type LSX de rapport atomique Si/Al inférieur ou égal à 1,15, de préférence égal à 1 $\pm$ 0,05, sous forme de cristaux dont :

   - la distribution granulométrique déterminée par comptage MEB est monomodale, de largeur de pic (2$\sigma$) inférieure à 8, de préférence inférieure à 6, de préférence encore inférieure à 4, de manière tout à fait préférée inférieure à 2 ; et
   - le diamètre moyen en nombre mesuré par microscopie électronique à balayage est supérieur à 0,1 $\mu$m et inférieur à 10 $\mu$m, de préférence inférieur à 4 $\mu$m, de préférence encore inférieur à 3 $\mu$m.

2. Zéolite selon la revendication 1, dont le taux de cristallinité est supérieur à 88%, de préférence supérieur à 93% et de manière encore préférée supérieur à 95%.

3. Procédé de préparation d'une zéolite de type LSX selon l'une quelconque des revendications 1 ou 2, dont les cristaux présentent un diamètre moyen en nombre mesuré par microscopie électronique à balayage supérieur à 0,1 $\mu$m et inférieur à 10 $\mu$m, de préférence inférieur à 4 $\mu$m, de préférence encore inférieur à 3 $\mu$m, de rapport atomique Si/Al inférieur ou égal à 1,15, de préférence égal à 1 $\pm$ 0,05, comprenant au moins une étape de mûrissement sous agitation, et une étape de cristallisation, éventuellement sous agitation, d'un gel dont la composition molaire répond aux conditions suivantes :

• rapport $Na_2O/(Na_2O + K_2O)$ de 0,75 à 1, de préférence de 0,75 à 0,8 ;
• rapport $H_2O/Al_2O_3$ de 60 à 85, de préférence de 65 à 80, et de préférence encore de 70 à 80 ;
• rapport $SiO_2/Al_2O_3$ de 1,8 à 2,2 ;
• rapport $(Na_2O + K_2O)/Al_2O_3$ de 4,8 à 6, et de préférence de 5 à 5,5.

**4.** Procédé selon la revendication 3 de synthèse de zéolite LSX présentant un taux de cristallinité supérieur à 88%, de préférence supérieur à 93% et de manière encore préférée supérieur à 95%.
*Former Claim 5 is deleted*

**5.** Procédé selon la revendication 3, **caractérisé en ce que** le gel est mûri sous agitation avec un taux de cisaillement supérieur à 25 $s^{-1}$, de préférence supérieur à 50 $s^{-1}$, de préférence encore supérieur à 100 $s^{-1}$, de manière tout à fait préférée supérieur à 125 $s^{-1}$.

**6.** Procédé selon l'une quelconque des revendications 3 à 5, dans lequel l'agitation est assurée au moyen d'un agitateur axial et/ou radial, de préférence choisi parmi agitateur hélice, impeller, et vis d'Archimède, de préférence au moyen d'une vis d'Archimède.

**7.** Procédé selon l'une quelconque des revendications 3 à 6, dans lequel le mûrissement est conduit à une température comprise entre 0°C et 80°C, de préférence entre 30°C et 70°C.

**8.** Procédé selon l'une quelconque des revendications 3 à 7, comprenant les étapes suivantes :

a) mélange d'une solution d'aluminate(s) alcalin(s), avec une source de silice, de préférence une silice colloïdale ou une solution de silicate(s) alcalin(s), et de l'hydroxyde de sodium et de l'hydroxyde potassium, jusqu'à gélification du mélange résultant,
b) mûrissement dudit gel sous agitation, à une température comprise entre 0°C et 80°C, de préférence entre 30°C et 70°C, pendant une durée comprise entre 0,5 heures et 40 heures, de préférence entre 5 heures et 30 heures, et de manière plus préférée entre 10 heures et 24 heures ;
c) cristallisation, éventuellement sous agitation, à une température comprise entre 50°C et 100°C, pendant une durée comprise entre 0,5 heure et 10 heures, de préférence entre 1 heure et 5 heures ;

**9.** Procédé selon la revendication 8, dans lequel la cristallisation est conduite sous agitation, de préférence avec un taux de cisaillement supérieur à 25 $s^{-1}$, de préférence supérieur à 50 $s^{-1}$, de préférence encore supérieur à 100 $s^{-1}$, de manière tout à fait préférée 125 $s^{-1}$.

**10.** Procédé selon l'une quelconque des revendications 8 ou 9, dans lequel la cristallisation est conduite dans les mêmes conditions d'agitation que celles du mûrissement selon la revendication 6.

**11.** Procédé selon l'une quelconque des revendications 8 à 10, dans lequel une semence, en quantité comprise entre 0,01% et 1,5% en poids par rapport au poids du mélange initial, est ajoutée, par parties ou en totalité dans une ou plusieurs des étapes suivantes dudit procédé :

- dans le mélange de l'étape a) ;
- au cours de la gélification ; et/ou
- au début du mûrissement.

**12.** Procédé selon l'une quelconque des revendications 8 à 11, dans lequel la semence est choisie parmi les zéolites, les argiles et les solutions nucléantes à base de silice et d'alumine.

**Patentansprüche**

**1.** Zeolith vom LSX-Typ mit einem Si/Al-Atomverhältnis kleiner gleich 1,15, vorzugsweise gleich 1 $\pm$ 0,05, in Form von Kristallen, wobei:

- die durch SEM-Zählung bestimmte Teilchengrößenverteilung monomodal ist und eine Peakbreite ($2\sigma$) von weniger als 8, vorzugsweise weniger als 6, noch weiter bevorzugt weniger als 4 und ganz besonders bevorzugt weniger als 2 aufweist; und

- der durch Rasterelektronenmikroskopie gemessene zahlenmittlere Durchmesser mehr als 0,1 μm und weniger als 10 μm, vorzugsweise weniger als 4 μm, noch weiter bevorzugt weniger als 3 μm, beträgt.

2. Zeolith nach Anspruch 1, dessen Kristallinitätsgrad mehr als 88%, vorzugsweise mehr als 93% und noch weiter bevorzugt mehr als 95% beträgt.

3. Verfahren zur Herstellung eines Zeoliths vom LSX-Typ nach Anspruch 1 oder 2, dessen Kristalle einen durch Rasterelektronenmikroskopie gemessenen zahlenmittleren Durchmesser von mehr als 0,1 μm und weniger als 10 μm, vorzugsweise weniger als 4 μm, noch weiter bevorzugt weniger als 3 μm, aufweisen und der ein Si/Al-Atomverhältnis kleiner gleich 1,15, vorzugsweise gleich 1 $\pm$ 0,05, aufweist, das mindestens einen Schritt der Reifung unter Rühren und einen Schritt der Kristallisation, gegebenenfalls unter Rühren, eines Gels, dessen molare Zusammensetzung den folgenden Bedingungen entspricht:

• $Na_2O/(Na_2O+K_2O)$-Verhältnis von 0,75 bis 1, vorzugsweise von 0,75 bis 0,8;
• $H_2O/Al_2O_3$-Verhältnis von 60 bis 85, vorzugsweise von 65 bis 80 und noch weiter bevorzugt von 70 bis 80;
• $SiO_2/Al_2O_3$-Verhältnis von 1,8 bis 2,2;
• $(Na_2O+K_2O)/Al_2O_3$-Verhältnis von 4,8 bis 6, vorzugsweise von 5 bis 5,5;

umfasst.

4. Verfahren nach Anspruch 3 zur Synthese von LSX-Zeolith mit einem Kristallinitätsgrad von mehr als 88%, vorzugsweise mehr als 93% und noch weiter bevorzugt mehr als 95%.

5. Verfahren nach Anspruch 3, **dadurch gekennzeichnet, dass** das Gel unter Rühren mit einer Scherrate von mehr als 25 s$^{-1}$, vorzugsweise von mehr als 50 s$^{-1}$, noch weiter bevorzugt von mehr als 100 s$^{-1}$, ganz besonders bevorzugt von mehr als 125 s$^{-1}$, gereift wird.

6. Verfahren nach einem der Ansprüche 3 bis 5, bei dem das Rühren mit Hilfe eines Axial- und/oder Radialrührers, vorzugsweise ausgewählt aus einem Propellerrührer, einem Impeller und einer archimedischen Schraube, vorzugsweise mit Hilfe einer archimedischen Schraube, gewährleistet wird.

7. Verfahren nach einem der Ansprüche 3 bis 6, bei dem die Reifung bei einer Temperatur zwischen 0°C und 80°C, vorzugsweise zwischen 30°C und 70°C, durchgeführt wird.

8. Verfahren nach einem der Ansprüche 3 bis 7, das folgende Schritte umfasst:

a) Mischen einer Lösung von Alkalialuminat(en) mit einer Siliciumdioxidquelle, vorzugsweise einem kolloidalen Siliciumdioxid oder einer Lösung von Alkalisilikat(en), und Natriumhydroxid und Kaliumhydroxid bis zur Gelierung der erhaltenen Mischung,
b) Reifen des Gels unter Rühren bei einer Temperatur zwischen 0°C und 80°C, vorzugsweise zwischen 30°C und 70°C, über einen Zeitraum zwischen 0,5 Stunden und 40 Stunden, vorzugsweise zwischen 5 Stunden und 30 Stunden und weiter bevorzugt zwischen 10 Stunden und 24 Stunden;
c) Kristallisieren, gegebenenfalls unter Rühren, bei einer Temperatur zwischen 50°C und 100°C über einen Zeitraum zwischen 0,5 Stunden und 10 Stunden, vorzugsweise zwischen 1 Stunde und 5 Stunden.

9. Verfahren nach Anspruch 8, bei dem die Kristallisation unter Rühren, vorzugsweise mit einer Scherrate von mehr als 25 s$^{-1}$, vorzugsweise von mehr als 50 s$^{-1}$, noch weiter bevorzugt von mehr als 100 s$^{-1}$, ganz besonders bevorzugt 125 s$^{-1}$, durchgeführt wird.

10. Verfahren nach Anspruch 8 oder 9, bei dem die Kristallisation unter den gleichen Rührbedingungen wie bei der Reifung nach Anspruch 6 durchgeführt wird.

11. Verfahren nach einem der Ansprüche 8 bis 10, bei dem ein Keimgut in einer Menge zwischen 0,01 und 1,5 Gew.-%, bezogen auf das Gewicht der Anfangsmischung, in Teilen oder vollständig in einem oder mehreren der folgenden Schritte des Verfahrens zugegeben wird:

- in die Mischung von Schritt a);
- während der Gelierung und/oder

- zu Beginn der Reifung.

**12.** Verfahren nach einem der Ansprüche 8 bis 11, wobei das Keimgut aus Zeolithen, Tonen und Nukleierungslösungen auf Basis von Siliciumdioxid und Aluminiumoxid ausgewählt wird.

**Claims**

**1.** LSX type zeolite having a Si/Al atomic ratio lower than or equal to 1.15, preferably equal to $1 \pm 0.05$, in the form of crystals whereof:

- the particle size distribution determined by SEM counting is monomodal, with a peak width ($2\sigma$) lower than 8, preferably lower than 6, even more preferably lower than 4, and ideally lower than 2; and
- the mean number diameter measured by scanning electron microscope is higher than 0.1 $\mu$m and lower than 10 $\mu$m, preferably lower than 4 $\mu$m, even more preferably lower than 3 $\mu$m.

**2.** Zeolite according to Claim 1, whereof the crystallinity rate is higher than 88%, preferably higher than 93%, even more preferably higher than 95%.

**3.** Method for preparing a LSX type zeolite according to either of Claims 1 and 2, whereof the crystals have a mean number diameter measured by scanning electron microscope higher than 0.1 $\mu$m and lower than 10 $\mu$m, preferably lower than 4 $\mu$m, even more preferably lower than 3 $\mu$m, having a Si/Al atomic ratio lower than or equal to 1.15, preferably equal to $1 \pm 0.05$, comprising at least one step of maturation with stirring and one step of crystallization optionally with stirring of a gel of which the molar composition satisfies the following conditions:

- $Na_2O/(Na_2O+K_2O)$ ratio of 0.75 to 1, preferably 0.75 to 0.8;
- $H_2O/Al_2O_3$ of 60 to 85, preferably 65 to 80, and even more preferably 70 to 80;
- $SiO_2/Al_2O_3$ of 1.8 to 2.2;
- $(Na_2O+K_2O)/Al_2O_3$, of 4.8 to 6, preferably 5 to 5.5.

**4.** Method according to Claim 3 for synthesizing LSX zeolite having a crystallinity rate higher than 88%, preferably higher than 93%, even more preferably higher than 95%.

**5.** Method according to Claim 3, **characterized in that** the gel is matured with stirring with a shear rate higher than 25 s$^{-1}$, preferably higher than 50 s$^{-1}$, even more preferably higher than 100 s$^{-1}$, and ideally higher than 125 s$^{-1}$.

**6.** Method according to any one of Claims 3 to 5, in which the stirring is provided by means of an axial and/or radial stirrer preferably selected from a propeller stirrer, impeller, and Archimedes screw, preferably using an Archimedes screw.

**7.** Method according to any one of Claims 3 to 6, in which the maturation is carried out at a temperature between 0°C and 80°C, preferably between 30° and 70°C.

**8.** Method according to any one of Claims 3 to 7, comprising the following steps:

a) mixing of a solution of alkali aluminate(s), with a source of silica, preferably a colloidal silica or a solution of alkali silicate(s), and sodium hydroxide and potassium hydroxide, until gelling of the resulting mixture,
b) maturation of said gel with stirring, at a temperature between 0°C and 80°C, preferably between 30°C and 70°C, for a period of between 0.5 hour and 40 hours, preferably 5 hours and 30 hours, and even more preferably between 10 hours and 24 hours;
c) crystallization, optionally with stirring, at a temperature of between 50°C and 100°C, for a period of between 0.5 hour and 10 hours, preferably between 1 hour and 5 hours.

**9.** Method according to Claim 8, in which the crystallization is carried out with stirring, preferably with a shear rate higher than 25 s$^{-1}$, preferably higher than 50 s$^{-1}$, even more preferably higher than 100 s$^{-1}$. and ideally higher than 125 s$^{-1}$.

**10.** Method according to either of Claims 8 and 9, in which the crystallization is carried out under the same stirring conditions as those of the maturation according to claims 6.

11. Method according to any one of Claims 8 to 10, in which a seed, in a quantity of between 0.01% and 1.5% by weight of the weight of the final mixture, is added, in parts or in full, in one or more of the following steps of said method:

- in the mixture of step a);
- during the gelling; and/or
- at the start of maturation.

12. Method according to any one of Claims 8 to 11, in which the seed is selected from zeolites, clays and nucleating solutions based on silica and alumina.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2357482
- GB 1580928 A
- US 4859217 A
- EP 0818418 A
- EP 0922673 B1
- EP 0960854 B1
- EP 0818048 A

**Littérature non-brevet citée dans la description**

- **DONALD W. BRECK.** Zeolite Molecular Sieves. John Wiley and Sons, 1974, 92
- **R.M. BARRER.** Hydrothermal Chemistry of Zeolites. Academic Press, 1982, 170-171
- **D. W. BRECK.** Zeolites Molecular Sieves. John Wiley and Sons, 1974, 727-731
- **G.H. KÜHL.** *Zeolites,* 1987, vol. 7, 451-457
- **G. H. KÜHL.** *Zeolites,* 1987, vol. 7, 451-457
- Ullmann's Encyclopedia of Industrial Chemistry. VCH, 1988, vol. B2, 25-5
- **LOWELL.** Characterization of Porous Solids and Powders : Surface Area, Pore Size and Density. *Micropore Analysis,* 143-145